# EUROPÄISCHE PATENTSCHRIFT

(11) **EP 2 706 634 B1**
(45) Veröffentlichungstag und Bekanntmachung des Hinweises auf die Patenterteilung: **18.04.2018**
(21) Anmeldenummer: 13182803.0
(22) Anmeldetag: 03.09.2013
(51) Int. Cl.: H02G 3/14

(54) **ELEKTRISCHES / ELEKTRONISCHES INSTALLATIONSGERÄT MIT EINEM ABDECKRAHMEN**
ELECTRICAL/ELECTRONIC INSTALLATION DEVICE WITH A COVERING FRAME
APPAREIL D'INSTALLATION ÉLECTRIQUE/ÉLECTRONIQUE DOTÉ D'UN CADRE DE RECOUVREMENT

(30) Priorität: 07.09.2012 DE 202012008548 U
(43) Veröffentlichungstag der Anmeldung: 12.03.2014
(73) Patentinhaber: ABB AG, 68309 Mannheim (DE)
(72) Erfinder: Lange, Manfred, 44229 Dortmund (DE); Lerke, Richard, 58135 Hagen (DE)

(56) Entgegenhaltungen:
- EP-A1- 0 620 621
- DE-A1-102004 024 093
- DE-U1- 29 920 219

## Beschreibung

Die Erfindung betrifft ein elektrisches / elektronisches Installationsgerät mit einem Abdeckrahmen, welcher zweiteilig aus einem Grundrahmen und einem daran befestigten Dekorelement ausgebildet ist. Eine Anwendung kann sowohl bei Unterputz-Geräten als auch bei Aufputz-Geräten erfolgen.

Aus dem DE 20 2006 019 253 U1 ist ein Frontrahmen für ein Elektro-Installationsgerät bekannt, mit einer vorderseitigen Dekorplatte, die an einer rückseitigen Trägerplatte befestigt ist. Die Dekorplatte weist an ihrer Rückseite Löcher (vorzugsweise Sacklöcher, die sich mit zunehmender Tiefe verbreitern) auf, die mit durchgehenden Löchern der Trägerplatte fluchten. Durch die Löcher sind Spreiznieten gesteckt, die in einem Nietschaft in dem Loch der Dekorplatte verklemmt und mit einem Nietkopf an der Trägerplatte verankert sind.

Aus der DE 195 38 944 C2 ist ein Installationsgerät zum Einbau in eine Wand, Säule oder dergleichen bekannt, mit einem Dekor aus Holz, Fliesen, Natur- oder Kunststein, Keramik, Textil, Kunststoff oder einer Kombination der vorstehenden Materialien. Das Installationsgerät ist mit einer Dekorschicht abgedeckt, die dem in der Umgebung des Installationsgeräts befindlichen Dekor entspricht, wobei die Dekorschicht mit dem in der Umgebung des Installationsgerätes befindlichen Dekor bündig abschließt. Die Dekorschicht kann in einem Blendrahmen gehalten sein. Die Steckdose und/oder der Lichtschalter kann von einem Außenrahmen umgeben sein, der das Dekor zur Steckdose bzw. zum Lichtschalter hin abgrenzt. Die Dekorschicht kann unmittelbar am Lichtschalter angeklebt oder angeschraubt sein oder mittels einer Rastverbindung am Lichtschalter befestigt sein. EP 0 620 621 offenbart ein elektrisches Installationsgerät nach dem Oberbegriff des Anspruchs 1. Der Erfindung liegt die Aufgabe zugrunde, ein optimiertes elektrisches / elektronisches Installationsgerät mit einem Abdeckrahmen anzugeben. Diese Aufgabe wird in Verbindung mit den Merkmalen des Oberbegriffes erfindungsgemäß dadurch gelöst, dass der Grundrahmen an seiner Frontseite mit mindestens einer funktionell als Festlager dienenden Zentrierbohrung sowie mit mehreren Druckverschlusshälften versehen ist und dass das Dekorelement an seiner Rückseite mit mindestens einem funktionell als Festlager dienenden Zentrierzapfen sowie mit mehreren Druckverschlusshälften versehen ist, wobei die Druckverschlusshälften und Zentrierbohrung / Zentrierzapfen jeweils korrespondierend zueinander angeordnet sind. Nach der Erfindung ist der Grundrahmen an seiner Frontseite mit mindestens einer funktionell als Loslager dienenden Zentrierbohrung und das Dekorelement an seiner Rückseite mit mindestens einem funktionell als Loslager dienenden Zentrierzapfen versehen, wobei Zentrierbohrung / Zentrierzapfen jeweils korrespondierend zueinander angeordnet sind. Damit wird ein Toleranzausgleich bei gleichzeitiger Zentrierung insbesondere bei langen Mehrfachrahmen sichergestellt. Die mit der Erfindung erzielbaren Vorteile bestehen insbesondere darin, dass der Endkunde / Anwender die Dekorelemente der Abdeckrahmen der elektrischen / elektronischen Installationsgeräte selbst auswechseln kann. Autorisiertes Fachpersonal ist hierfür nicht erforderlich. Dabei können die Dekorelemente aus unterschiedlichem Material beschaffen sein, wie Kunststoff (mit unterschiedlicher Oberflächengestaltung und unterschiedlichen Farben), Mineralstoff, Metall, Glas, Stein, Holz usw. Unabhängig vom gewählten Material ist das Gesamtsystem des elektrischen / elektronischen Installationsgerät stets berührungssicher ausgelegt, um die Gefahr von elektrischem Schlag zu verhindern. Die einmal vom Endkunden / Anwender ausgewählten Dekorelemente können zu jeder Zeit gegen andere,

gegebenenfalls höherwertige Dekorelemente ausgetauscht werden, ohne dass hierzu die Abdeckrahmen entfernt werden müssen. Spaltmaßvorgaben werden produktionsunabhängig erfüllt.

Die Erfindung wird nachstehend an Hand der in der Zeichnung dargestellten Ausführungsbeispiele erläutert. Es zeigen:
- Fig. 1: eine perspektivische Sicht auf ein elektrisches / elektronisches Installationsgerät erster Ausführungsform vor Befestigung eines Dekorelements,
- Fig. 2: eine Sicht auf das elektrische / elektronische Installationsgerät erster Ausführungsform bei befestigtem Dekorelement,
- Fig. 3: eine Sicht auf das elektrische / elektronische Installationsgerät erster Ausführungsform bei entferntem Dekorelement,
- Fig. 4: eine Sicht auf die Rückseite des Dekorelements,
- Fig. 5: eine perspektivische Sicht auf ein elektrisches / elektronisches Installationsgerät zweiter Ausführungsform vor Befestigung des Dekorelements.

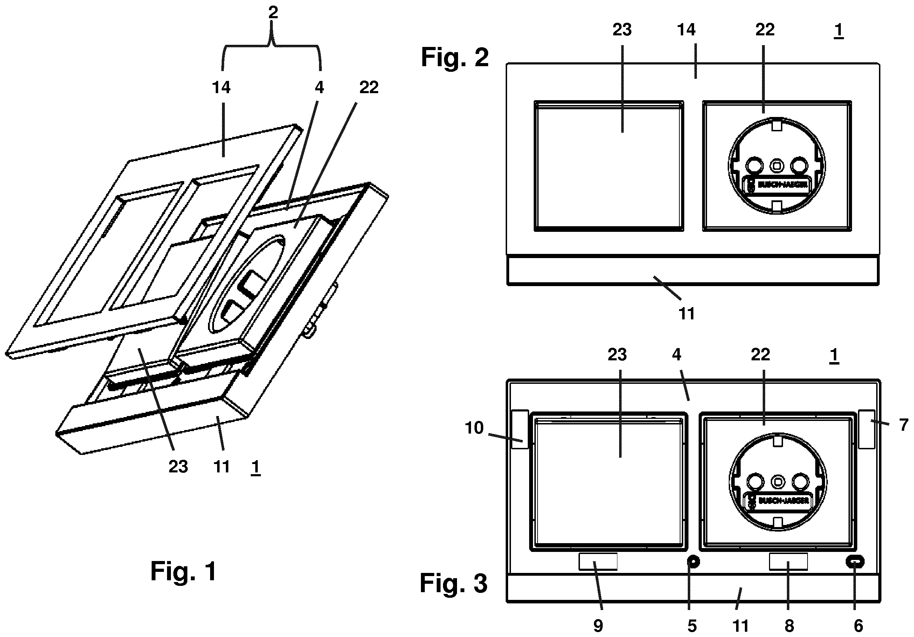

In Fig. 1 ist eine perspektivische Sicht auf ein elektrisches / elektronisches Installationsgerät erster Ausführungsform vor Befestigung eines Dekorelements dargestellt. Das elektrische / elektronische Installationsgerät 1 weist beispielsweise einen Steckdoseneinsatz 22 und einen Schaltereinsatz 23 auf, welche von einem Abdeckrahmen 2 eingerahmt sind. Dieser Abdeckrahmen ist zweiteilig ausgelegt und wird aus einem aus einem elektrisch isolierenden Kunststoff bestehenden Grundrahmen 4 und einem Dekorelement 14 gebildet. Dabei ist der Grundrahmen 4 konstruktiv derartig ausgelegt, dass alle sicherheitsrelevanten und normativen Vorgaben vom Grundrahmen 4 selbst erfüllt werden, ohne dass ein Dekorelement 14 montiert ist. Beim gezeigten Ausführungsbeispiel ist der Abdeckrahmen 2 in Form eines 2fach-Rahmens für zwei Einsätze ausgebildet, es ist jedoch abweichend hiervon selbstverständlich in gleicher Art und Weise möglich, den Abdeckrahmen 2 in Form eines 1 fach-Rahmens oder beliebigen Mehrfachrahmens, wie 3fach-Rahmens oder 4fach-Rahmens auszubilden. Beim gezeigten Ausführungsbeispiel weist der Grundrahmen 4 eine Abschlussleiste 11 auf, welche jedoch nicht von wesentlicher Bedeutung für die Erfindung ist, d. h. es sind in gleicher Weise Ausführungsformen des Grundrahmens 4 ohne die Abschlussleiste 12 realisierbar.

In Fig. 2 ist eine Sicht auf das elektrische / elektronische Installationsgerät erster Ausführungsform bei befestigtem Dekorelement dargestellt. Das in Form eines 2fach-Rahmens ausgebildete Dekorelement 14 des Abdeckrahmens 2 umrahmt den Steckdoseneinsatz 22 und den Schaltereinsatz 23 des elektrischen / elektronischen Installationsgeräts 1 und wird von der Abschlussleiste 11 des Grundrahmens 4 begrenzt.

In Fig. 3 ist eine Sicht auf das elektrische / elektronische Installationsgerät erster Ausführungsform bei entferntem Dekorelement dargestellt. Der in Form eines 2fach-Rahmens ausgebildete und eine Abschlussleiste 11 aufweisende Grundrahmen 4 des Abdeckrahmens 2 umrahmt den Steckdoseneinsatz 22 und den Schaltereinsatz 23 des elektrischen / elektronischen Installationsgeräts 1 und wird von der Abschlussleiste 11 des Grundrahmens 4 begrenzt. Der aus zwei Längsschenkeln und drei Querschenkeln gebildete Grundrahmen 4 weist folgende wesentlichen Komponenten an seiner Frontseite auf:
- eine funktionell als Festlager dienende Zentrierbohrung 5, welche beispielsweise in der Mitte des unteren Längsschenkels angeordnet ist,
- eine funktionell als Loslager dienende Zentrierbohrung 6, welche beispielsweise an einem Rand des unteren Längsschenkels angeordnet ist,
- vier Druckverschlusshälften 7, 8, 9, 10, welche beispielsweise an beiden äußeren Querschenkeln und am unteren Längsschenkels angeordnet sind.

Die Druckverschlusshälften 7, 8, 9, 10 sind vorzugsweise auf selbstklebenden Pads angeordnet.

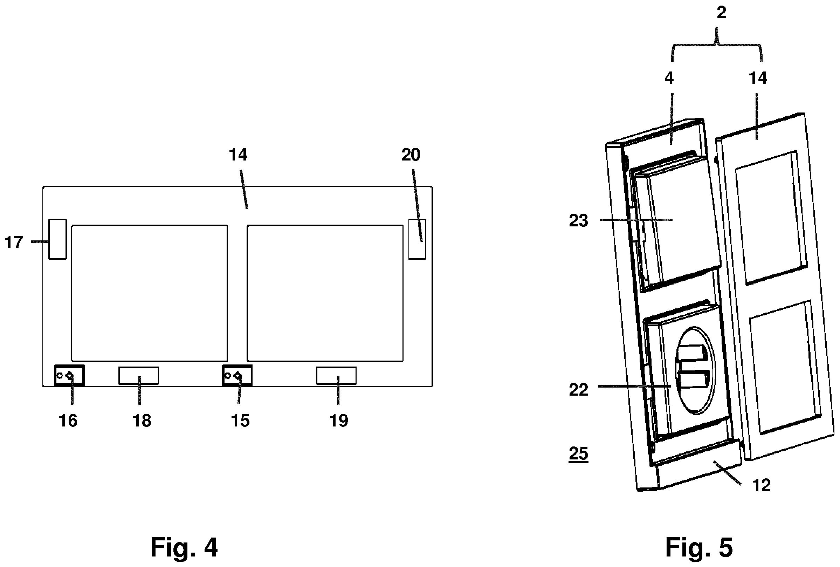

In Fig. 4 ist eine Sicht auf die Rückseite des Dekorelements dargestellt. Das aus zwei Längsschenkeln und drei Querschenkeln gebildete Dekorelement 14 weist folgende wesentlichen Komponenten auf:
- einen Zentrierzapfen 15, welcher beispielsweise in der Mitte des unteren Längsschenkels angeordnet ist,
- einen Zentrierzapfen 16, welcher beispielsweise an einem Rand des unteren Längsschenkels angeordnet ist,
- vier Druckverschlusshälften 17, 18, 19, 20, welche beispielsweise an beiden äußeren Querschenkeln und am unteren Längsschenkels angeordnet sind.

Die Zentrierzapfen 15, 16 und die Druckverschlusshälften 17, 18, 19, 20 sind vorzugsweise auf selbstklebenden Pads angeordnet.

Bei einer Zusammenschau der Figuren 3 und 4 ist ersichtlich, dass hinsichtlich der Verbindung zwischen Grundrahmen 4 und Dekorelement 14
- die Zentrierbohrung 5 korrespondierend zu dem Zentrierzapfen 15 angeordnet ist,
- die Zentrierbohrung 6 korrespondierend zu dem Zentrierzapfen 16 angeordnet ist,
- die Druckverschlusshälfte 7 korrespondierend zu der Druckverschlusshälfte 17 angeordnet ist,
- die Druckverschlusshälfte 8 korrespondierend zu der Druckverschlusshälfte 18 angeordnet ist,
- die Druckverschlusshälfte 9 korrespondierend zu der Druckverschlusshälfte 19 angeordnet ist,
- die Druckverschlusshälfte 10 korrespondierend zu der Druckverschlusshälfte 20 angeordnet ist.

Während die Zentrierzapfen 15, 16 die exakte Position des Dekorelementes 14 auf dem Grundrahmen 14 sicherstellen, dienen die durch die Druckverschlusshälften 7 - 10 und 17-20 gebildeten Druckverschlüsse ausschließlich für die Fixierung des Dekorelements 14 auf dem Grundrahmen 4. Die Zentrierbohrungen 5 bzw. 6 im Grundrahmen 4 sind geometrisch so gestaltet, dass sie die Funktionen eines Festlagers bzw. eines Loslagers übernehmen und damit für Toleranzausgleich bei gleichzeitiger Zentrierung insbesondere bei langen Mehrfachrahmen sorgen.

Die Größe einer einzelnen Druckverschlusshälfte 7 - 10, 17 - 20 und die Anzahl der Druckverschlüsse variiert in Abhängigkeit von der Größe des Dekorelementes 14 und des beim Dekorelement 14 eingesetzten Materials, welches letztlich das Gewicht des Dekorelementes bestimmt. Die durch die Druckverschlusshälften 7 - 10, 17-20 gebildeten Druckverschlüsse stellen ein wiederlösbares Befestigungssystem mit hoher Zugfestigkeit / Haltekraft dar und können beispielsweise als Klettverschlüsse (Haken- und Schlaufenband) ausgebildet sein.

In Fig. 5 ist eine perspektivische Sicht auf ein elektrisches / elektronisches Installationsgerät zweiter Ausführungsform vor Befestigung des Dekorelements dargestellt. Während Steckdoseneinsatz 22 und Schaltereinsatz 23 bei dem elektrischen / elektronischen Installationsgerät 1 erster Ausführungsform waagrecht nebeneinander angeordnet sind, sind diese Einsätze 22, 23 bei dem elektrischen / elektronischen Installationsgerät 25 zweiter Ausführungsform senkrecht untereinander angeordnet. Dementsprechend schmal ist auch die Abschlussleiste 12 des Grundrahmens 4 des Abdeckrahmens 2 ausgebildet. Der Abdeckrahmen 2 wird wiederum durch das mit dem Grundrahmen 4 zu verbindende Dekorelement 14 komplettiert.

### Bezugszeichenliste

- 1: elektrisches / elektronisches Installationsgerät
- 2: Abdeckrahmen
- 3: -
- 4: Grundrahmen
- 5: Zentrierbohrung mit der Funktion eines Festlagers
- 6: Zentrierbohrung mit der Funktion eines Loslagers
- 7: Druckverschlusshälfte
- 8: Druckverschlusshälfte
- 9: Druckverschlusshälfte
- 10: Druckverschlusshälfte
- 11: Abschlussleiste
- 12: Abschlussleiste
- 13: -
- 14: Dekorelement
- 15: Zentrierzapfen
- 16: Zentrierzapfen
- 17: Druckverschlusshälfte
- 18: Druckverschlusshälfte
- 19: Druckverschlusshälfte
- 20: Druckverschlusshälfte
- 21: -
- 22: Steckdoseneinsatz
- 23: Schaltereinsatz
- 24: -
- 25: elektrisches / elektronisches Installationsgerät

## Patentansprüche

1. Elektrisches / elektronisches Installationsgerät (1, 25) mit einem Abdeckrahmen (2), welcher zweiteilig aus einem Grundrahmen (4) und einem daran befestigten Dekorelement (14) ausgebildet ist, **dadurch gekennzeichnet, dass** der Grundrahmen (4) an seiner Frontseite mit mindestens einer funktionell als Festlager dienenden Zentrierbohrung (5) sowie mit mehreren Druckverschlusshälften (7, 8, 9, 10) versehen ist und dass das Dekorelement (14) an seiner Rückseite mit mindestens einem funktionell als Festlager dienenden Zentrierzapfen (15) sowie mit mehreren Druckverschlusshälften (17, 18, 19, 20) versehen ist, wobei die Druckverschlusshälften (7, 8, 9, 10, 17, 18, 19, 20) und Zentrierbohrung (5) / Zentrierzapfen (15) jeweils korrespondierend zueinander angeordnet sind,
**dadurch gekennzeichnet, dass**
der Grundrahmen (4) an seiner Frontseite mit mindestens einer funktionell als Loslager dienenden Zentrierbohrung (6) und dass das Dekorelement (14) an seiner Rückseite mit mindestens einem funktionell als Loslager dienenden Zentrierzapfen (16) versehen ist, wobei Zentrierbohrung (6) / Zentrierzapfen (16) jeweils korrespondierend zueinander angeordnet sind.

## Claims

1. Electrical/electronic installation device (1, 25) having a covering frame (2) which is formed in two parts from a base frame (4) and a decorative element (14) fastened thereon, **characterized in that**, on its front side, the base frame (4) is provided with at least one centring bore (5), which serves in functional terms as a fixed bearing, and with a plurality of press-lock halves (7, 8, 9, 10), and **in that**, on its rear side, the decorative element (14) is provided with at least one centring pin (15), which serves in functional terms as a fixed bearing, and with a plurality of press-lock halves (17, 18, 19, 20), wherein the press-lock halves (7, 8, 9, 10, 17, 18, 19, 20) and the centring bore (5)/centring pin (15) are arranged to correspond to one another in each case, **characterized in that**,
on its front side, the base frame (4) with at least one centring bore (6), which serves in functional terms as a floating bearing, and **in that**, on its rear side, the decorative element (14) is provided with at least one centring pin (16), which serves in functional terms as a floating bearing, wherein the centring bore (6)/centring pin (16) are arranged to correspond to one another in each case.

## Revendications

1. Appareil d'installation électrique/électronique (1, 25) comprenant un cadre de recouvrement (2) qui est réalisé en deux parties à partir d'un cadre de base (4) et d'un élément décoratif (14) fixé sur celui-ci, **caractérisé en ce que** le cadre de base (4) est pourvu au niveau de son côté avant d'au moins un alésage central (5) servant fonctionnellement de palier fixe et de plusieurs moitiés de fermeture par pression (7, 8, 9, 10) et **en ce que** l'élément décoratif (14) est pourvu au niveau de son côté arrière d'au moins un tourillon de centrage (15) servant fonctionnellement de palier fixe et de plusieurs moitiés de fermeture par pression (17, 18, 19, 20), les moitiés de fermeture par pression (7, 8, 9, 10, 17, 18, 19, 20) et l'alésage central (5) / le tourillon central (15) étant disposés à chaque fois de manière à se correspondre mutuellement,
**caractérisé en ce que**
le cadre de base (4) au niveau de son côté avant d'au moins un alésage central (6) servant fonctionnellement de palier fou et **en ce que** l'élément décoratif (14) est pourvu au niveau de son côté arrière d'au moins un tourillon de centrage (16) servant fonctionnellement de palier fou, l'alésage central (6) / le tourillon central (16) étant disposés à chaque fois de manière à se correspondre mutuellement.
